# FASCICULE DE BREVET EUROPEEN

(11) **EP 4 424 597 B1**
(45) Date de publication et mention de la délivrance du brevet: **31.12.2025**
(21) Numéro de dépôt: 24160118.6
(22) Date de dépôt: 27.02.2024
(51) Int. Cl.: B64D 11/02, F16K 15/14, F16K 24/06, B64C 1/14

(54) **DISPOSITIF DE VIDANGE D'UN RÉSERVOIR D'EAUX USÉES D'AÉRONEF**
VORRICHTUNG ZUM ENTLEEREN EINES FLUGZEUGABWASSERTANKS
DEVICE FOR EMPTYING AN AIRCRAFT WASTE WATER TANK

(30) Priorité: 28.02.2023 FR 2301813
(43) Date de publication de la demande: 04.09.2024
(73) Titulaire: Airbus Canada Limited Partnership, Mirabel, QC J7N 3C6 (CA)
(72) Inventeur: GOURGUES, Marion, Mirabel, J7N 3C6 (CA); LALANDE, André, Mirabel, J7N 3C6 (CA); MARCOTTE, Bruno, Mirabel, J7N 3C6 (CA)
(74) Mandataire: den Braber, Gérard Paul

(56) Documents cités:
- WO-A1-2019/136564
- CN-A- 1 799 965
- FR-A1- 2 561 744
- US-A- 4 086 670
- US-A- 4 690 296
- US-A- 5 419 366
- US-A1- 2020 262 560

## Description

### Domaine technique

La présente demande se rapporte à un dispositif de vidange d'un réservoir d'eaux usées comprenant un bouchon équipé d'un système d'équilibrage de pression ainsi qu'à un aéronef comportant au moins un tel dispositif de vidange.

### État de la technique

Selon un mode de réalisation, un aéronef comprend au moins un réservoir prévu pour stocker les eaux usées, un système de mise au vide prévu pour générer une dépression dans le réservoir ainsi qu'un dispositif de vidange configuré pour vider le réservoir. Ce dispositif de vidange comprend un conduit de vidange qui présente une extrémité amont débouchant dans le réservoir et une extrémité aval, débouchant à l'extérieur du fuselage de l'aéronef, à laquelle peut être raccordé un conduit d'évacuation ainsi qu'une vanne de vidange positionnée entre les extrémités amont et aval du conduit de vidange et configurée pour occuper un état passant dans lequel la vanne de vidange permet un écoulement dans le conduit de vidange, de l'extrémité amont vers l'extrémité aval, et un état fermé dans lequel la vanne de vidange empêche tout écoulement dans le conduit de vidange.

Au fil du temps, l'usure de la vanne de vidange peut engendrer une légère fuite des eaux usées. Pour empêcher tout écoulement au niveau de l'extrémité aval du conduit de vidange en dehors des périodes de vidange, le dispositif de vidange comprend un bouchon configuré pour coopérer avec l'extrémité aval du conduit de vidange et occuper une position fermée dans laquelle le bouchon obture l'extrémité aval du conduit de vidange et une position ouverte dans laquelle le bouchon dégage l'extrémité aval du conduit de vidange.

Lors des opérations de vidange, il peut être très difficile pour un opérateur d'ouvrir le bouchon. Le document US4690296 divulgue un dispositif de vidange pour un réservoir d'aéronef comprenant un conduit de vidange, une vanne et un bouchon.

### Exposé de l'invention

La présente invention vise à remédier à tout ou partie des inconvénients de l'art antérieur.

À cet effet, l'invention a pour objet un dispositif de vidange pour un réservoir d'aéronef comprenant :
- un conduit de vidange qui présente une extrémité amont, configurée pour déboucher dans le réservoir, et une extrémité aval,
- une vanne de vidange positionnée entre les extrémités amont et aval du conduit de vidange,
- un bouchon configuré pour occuper une position fermée dans laquelle le bouchon obture l'extrémité aval du conduit de vidange et une position ouverte dans laquelle le bouchon dégage l'extrémité aval du conduit de vidange, le bouchon séparant, en position fermée, une zone extérieure et une zone intérieure située dans le conduit de vidange entre la vanne de vidange et le bouchon en position fermée, le bouchon présentant une face intérieure orientée vers la zone intérieure ainsi qu'une face extérieure orientée vers la zone extérieure.

Selon l'invention, le dispositif de vidange comprend un système d'équilibrage de pression comportant au moins un orifice traversant reliant les faces intérieure et extérieure du bouchon ainsi qu'au moins une vanne d'équilibrage supportée par le bouchon et configurée pour occuper un état ouvert dans lequel la vanne d'équilibrage permet aux zones intérieure et extérieure de communiquer entre elles via le (ou les) orifice(s) traversant(s) et un état fermé dans lequel la vanne d'équilibrage empêche les zones intérieure et extérieure de communiquer entre elles.

Le système d'équilibrage permet d'équilibrer les pressions de part et d'autre du bouchon, ce qui contribue à faciliter l'ouverture du bouchon.

Selon une autre caractéristique, la vanne d'équilibrage est positionnée dans la zone intérieure et présente une première face orientée vers la face intérieure du bouchon ainsi qu'une deuxième face opposée à la première face, la première face étant plaquée contre la face intérieure du bouchon à l'état fermé.

Selon une autre caractéristique, le bouchon comprend un trou le traversant. En complément, la vanne d'équilibrage comprend une tige configurée pour se loger dans le trou, la tige présentant une section sensiblement identique à celle du trou, une première extrémité reliée à la première face de la vanne d'équilibrage ainsi qu'une extrémité libre opposée à la première extrémité.

Selon une autre caractéristique, le trou présente un axe sensiblement perpendiculaire à la face intérieure du bouchon, la tige étant sensiblement perpendiculaire à la première face de la vanne d'équilibrage et centrée par rapport à cette première face.

Selon une autre caractéristique, la tige a une longueur supérieure à l'épaisseur du bouchon pour que l'extrémité libre de la tige soit accessible et actionnable depuis la zone extérieure. Selon une autre caractéristique, la vanne d'équilibrage comprend, au niveau de sa première face, au moins un évidement qui forme une cavité entre le bouchon et la vanne d'équilibrage lorsque cette dernière est à l'état fermé.

Selon une autre caractéristique, le dispositif de vidange comprend plusieurs orifices traversants et une unique vanne d'équilibrage, les orifices traversants et la vanne d'équilibrage étant configurés et positionnés les uns par rapport aux autres de manière à ce que chaque orifice traversant débouche au droit d'un évidement lorsque la vanne d'équilibrage est à l'état fermé.

Selon une autre caractéristique, l'évidement forme une gorge annulaire qui s'étend tout autour de la tige.

Selon une autre caractéristique, l'évidement est distant de la tige de sorte que la première face de la vanne d'équilibrage forme un épaulement entre l'évidement et la tige.

Selon une autre caractéristique, l'évidement est distant de la deuxième face de la vanne d'équilibrage sur toute la circonférence de la vanne d'équilibrage, la première face de la vanne d'équilibrage formant, entre l'évidement et la deuxième face, un bord périphérique, qui s'étend sur toute la circonférence de la vanne d'équilibrage, configuré pour être en contact avec la face intérieure du bouchon lorsque la vanne d'équilibrage est à l'état fermé.

Selon une autre caractéristique, la vanne d'équilibrage comprend une collerette, située entre l'évidement et la deuxième face de la vanne d'équilibrage, qui s'étend jusqu'au bord périphérique. En complément, la vanne d'équilibrage est réalisée dans un matériau permettant à la collerette de se déformer de manière élastique entre un premier état non déformé, correspondant à l'état fermé de la vanne d'équilibrage, dans lequel le bord périphérique est en contact avec la face intérieure du bouchon sur tout le pourtour de la vanne d'équilibrage ainsi qu'un deuxième état déformé de manière élastique, correspondant à l'état ouvert de la vanne d'équilibrage, dans lequel le bord périphérique est écarté de la face intérieure du bouchon.

L'invention a également pour objet un aéronef comprenant un dispositif de vidange selon l'une des caractéristiques précédentes.

D'autres caractéristiques et avantages ressortiront de la description de l'invention qui va suivre, description donnée à titre d'exemple uniquement, en regard des dessins annexés.

### Brève description des figures

- La figure 1 est une vue en perspective d'une partie arrière d'un aéronef et en détail d'une zone du fuselage de l'aéronef comprenant un dispositif de vidange illustrant un mode de réalisation de l'invention,
- La figure 2 est une coupe longitudinale d'un dispositif de vidange illustrant un mode de réalisation de l'invention,
- La figure 3 est une coupe longitudinale d'un système d'équilibrage de pression dans un état fermé illustrant un mode de réalisation de l'invention,
- La figure 4 est une coupe longitudinale du système d'équilibrage de pression visible sur la figure 3 dans un état ouvert.

### Description détaillée de quelques modes de réalisation

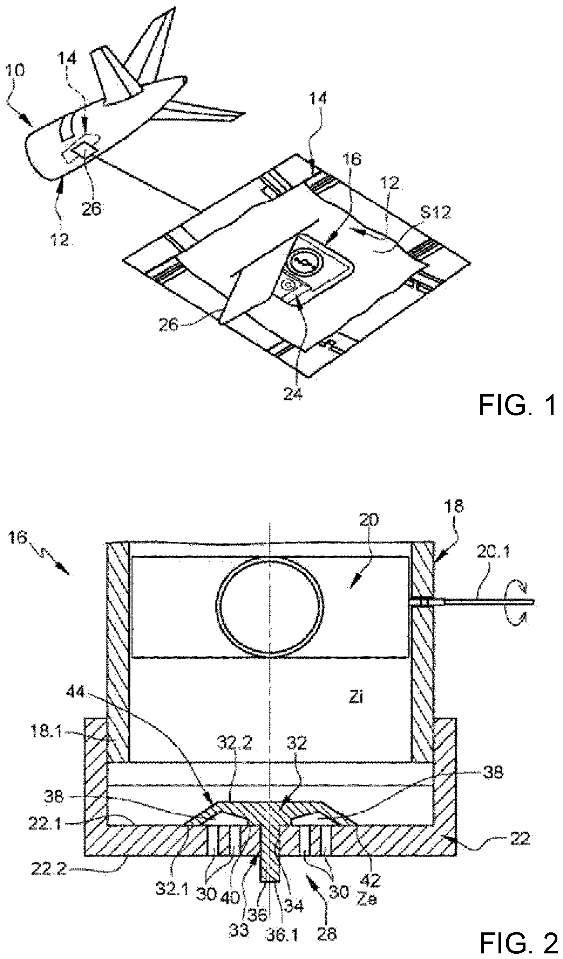

Selon un mode de réalisation visible sur la figure 1, un aéronef 10 comprend un fuselage 12, au moins un réservoir 14 configuré pour stocker des eaux usées ainsi qu'un dispositif de vidange 16 configuré pour faire communiquer le réservoir 14 avec une zone extérieure du fuselage 12.

Ce dispositif de vidange 16 comprend un conduit de vidange 18 qui présente une extrémité amont débouchant dans le réservoir 14 et une extrémité aval 18.1, débouchant à l'extérieur du fuselage 12, à laquelle peut être raccordé un conduit d'évacuation ainsi qu'une vanne de vidange 20 positionnée entre les extrémités amont et aval du conduit de vidange 18. Cette vanne de vidange 20 est configurée pour occuper un état ouvert dans lequel la vanne de vidange 20 permet un écoulement dans le conduit de vidange 18, de l'extrémité amont vers l'extrémité aval, et un état fermé dans lequel la vanne de vidange 20 empêche tout écoulement dans le conduit de vidange 18.

Selon un mode de réalisation, la vanne de vidange 20 présente un boisseau sphérique ainsi qu'une commande 20.1 actionnable par un opérateur pour commuter la vanne de vidange de l'état fermé à l'état ouvert ou inversement.

Le dispositif de vidange 16 comprend un bouchon 22 configuré pour coopérer avec l'extrémité aval 18.1 du conduit de vidange 18 et occuper une position fermée (visible sur la figure 2) dans laquelle le bouchon 22 obture l'extrémité aval 18.1 du conduit de vidange 18 et une position ouverte dans laquelle le bouchon 22 dégage l'extrémité aval 18.1 du conduit de vidange 18.

L'extrémité aval 18.1 du conduit de vidange 18 est configurée pour raccorder de manière démontable un conduit d'évacuation lorsque le bouchon 22 est en position ouverte.

Selon une configuration, le fuselage 12 comprend une surface extérieure S12, au moins un logement 24, en creux par rapport à la surface extérieure S12, ainsi qu'une trappe 26 mobile entre une position ouverte (visible sur la figure 1) dans laquelle la trappe 26 dégage le logement 24 et une position fermée dans laquelle la trappe 26 ferme le logement et présente une surface extérieure dans le prolongement de la surface extérieure S12 du fuselage 12.

Le logement 24 est dimensionné pour loger au moins l'extrémité aval 18.1 du conduit de vidange 18 équipée du bouchon 22 ainsi que la commande 20.1 de la vanne de vidange 20. Tous ces éléments ne sont pas plus décrits car ils peuvent être identiques à ceux de l'art antérieur.

Quel que soit le mode de réalisation, le bouchon 22 sépare en position fermée une zone extérieure Ze et une zone intérieure Zi située dans le conduit de vidange 18 entre la vanne de vidange 20 et le bouchon 22. Le bouchon 22 présente une face intérieure 22.1 orientée vers la zone intérieure Zi ainsi qu'une face extérieure 22.2 orientée vers la zone extérieure Ze, sensiblement parallèle à la face intérieure 22.1.

Le dispositif de vidange 16 comprend un système d'équilibrage de pression 28 comportant au moins un orifice traversant 30, reliant les faces intérieure et extérieure 22.1, 22.2 du bouchon 22, ainsi qu'au moins une vanne d'équilibrage 32 supportée par le bouchon 22 et configurée pour occuper un état ouvert dans lequel la vanne d'équilibrage 32 permet aux zones intérieure et extérieure Ze, Zi de communiquer entre elles via le (ou les) orifice(s) traversant(s) 30 et un état fermé dans lequel la vanne d'équilibrage 32 empêche les zones intérieure et extérieure Ze, Zi de communiquer entre elles.

Lorsque le bouchon 22 est en position fermée et que la vanne d'équilibrage 32 est à l'état ouvert, les zones intérieure et extérieure Ze, Zi communiquant entre elles, les pressions dans ces zones Ze, Zi sont équilibrées. Les pressions étant équilibrées de part et d'autre du bouchon 22, un opérateur peut aisément l'ouvrir.

Selon une configuration, la vanne d'équilibrage 32 est positionnée dans la zone intérieure Zi et plaquée contre la face intérieure 22.1 du bouchon 22 à l'état fermé.

Selon un agencement, le dispositif d'équilibrage de pression 28 comprend une seule vanne d'équilibrage 32 et plusieurs orifices traversants 30 coopérant avec la vanne d'équilibrage 32.

La vanne d'équilibrage 32 présente une première face 32.1 orientée vers la face intérieure 22.1 du bouchon 22 et une deuxième face 32.2 orientée vers la zone intérieure Zi.

Selon une configuration, la vanne d'équilibrage 32 a une forme tronconique et présente une grande face cylindrique qui correspond à la première face 32.1 de la vanne d'équilibrage 32, une petite face cylindrique ainsi qu'une face latérale reliant les grande et petite faces cylindriques, la petite face cylindrique et la face latérale correspondant à la deuxième face 32.2 de la vanne d'équilibrage 32.

Le système d'équilibrage de pression 28 comprend une liaison 33 reliant la vanne d'équilibrage 32 et le bouchon 22. Selon un mode de réalisation, cette liaison 33 comprend un trou 34 prévu dans le bouchon 22 ainsi qu'une tige 36 solidaire de la vanne d'équilibrage 32 et configurée pour se loger dans le trou 34. Selon une configuration, le trou 34 est traversant, relie les faces intérieure et extérieure 22.1, 22.2 du bouchon 22 et présente un axe sensiblement perpendiculaire à la face intérieure 22.1 du bouchon 22. En complément, la tige 36 est sensiblement perpendiculaire à la première face 32.1 de la vanne d'équilibrage 32, centrée par rapport à cette première face 32.1 et présente une section sensiblement identique à celle du trou 34, une première extrémité reliée à la première face 32.1 de la vanne d'équilibrage 32 ainsi qu'une extrémité libre 36.1 opposée à la première extrémité. La tige 36 et la vanne d'équilibrage 32 forment une unique et même pièce.

Selon cette configuration, la tige 36 et la vanne d'équilibrage 32 peuvent se translater par rapport au bouchon 22 selon une direction sensiblement perpendiculaire à la face intérieure 22.1 du bouchon entre une première position, correspondant à l'état fermé de la vanne d'équilibrage 32, dans laquelle la première face 32.1 est en contact avec la face intérieure 22.1 du bouchon 22 ainsi qu'une deuxième position, correspondant à l'état ouvert de la vanne d'équilibrage 32, dans laquelle la première face 32.1 de la vanne d'équilibrage 32 est écartée de la face intérieure 22.1 du bouchon 22.

Selon un agencement, la tige 36 a une longueur supérieure à l'épaisseur du bouchon 22 (distance séparant les faces intérieure et extérieure 22.1, 22.2). Ainsi, son extrémité libre 36.1 est accessible et actionnable depuis la zone extérieure Ze.

Selon une autre caractéristique, la vanne d'équilibrage 32 comprend, au niveau de sa première face 32.1, au moins un évidement 38 qui forme une cavité entre le bouchon 22 et la vanne d'équilibrage 32 lorsque cette dernière est à l'état fermé. Les orifices traversants 30 et la vanne d'équilibrage 32 sont configurés et positionnés les uns par rapport aux autres de manière à ce que chaque orifice traversant 30 débouche au droit d'un évidement 38 lorsque la vanne d'équilibrage 32 est à l'état fermé.

Selon une configuration, l'évidement 38 s'étend sur toute la circonférence de la vanne d'équilibrage 32, tout autour de la tige 36 et forme une gorge annulaire, en creux par rapport à la première face 32.1 de la vanne d'équilibrage 32. En complément, chaque orifice traversant 30 du bouchon 22 débouche dans une zone de la face intérieure 22.1 du bouchon 22 en forme d'anneau, ledit anneau étant coaxial au trou 34 et présentant des diamètres intérieur et extérieur égaux à ceux de l'évidement 38.

En présence d'une tige 36 et d'un évidement 38 en forme de gorge annulaire, la vanne d'équilibrage 32 a une forme en parapluie.

Selon un agencement, l'évidement 38 est distant de la tige 36 de sorte que la première face 32.1 de la vanne d'équilibrage forme un épaulement 40 entre l'évidement 38 et la tige 36. Cet épaulement 40 empêche que la vanne d'équilibrage 32 ne soit plaquée sur toute sa surface contre la face intérieure 22.1 du bouchon 22.

L'évidement 38 est distant de la deuxième face 32.2 de la vanne d'équilibrage 32 sur toute la circonférence de la vanne d'équilibrage 32 de sorte que la première face 32.1 de la vanne d'équilibrage forme, entre l'évidement 38 et la deuxième face 32.2 de la vanne d'équilibrage 32, un bord périphérique 42, qui s'étend sur toute la circonférence de la vanne d'équilibrage 32, configuré pour être en contact avec la face intérieure 22.1 du bouchon 22 lorsque la vanne d'équilibrage 32 est à l'état fermé.

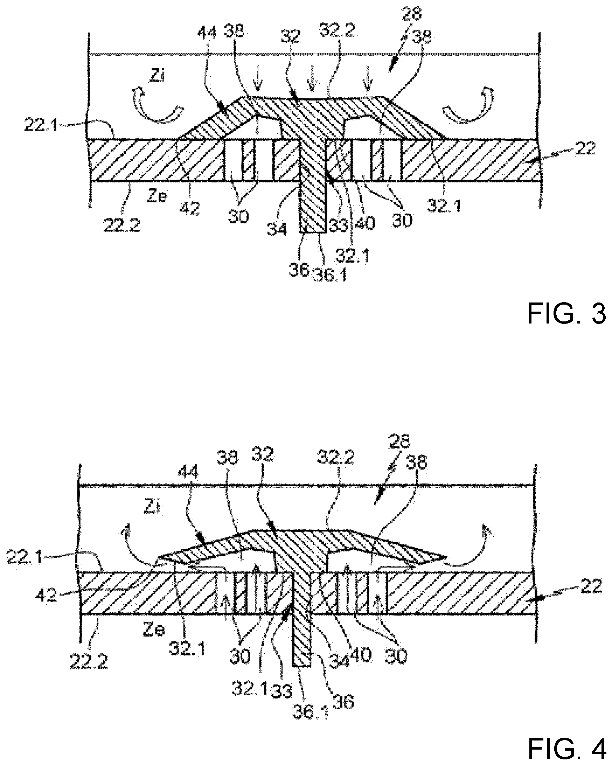

Selon une caractéristique, la vanne d'équilibrage 32 comprend une collerette 44, située entre l'évidement 38 et la deuxième face 32.2 de la vanne d'équilibrage 32, qui s'étend jusqu'au bord périphérique 42. La vanne d'équilibrage 32 est réalisée dans un matériau permettant à la collerette 44 de se déformer de manière élastique entre un premier état non déformé, visible sur la figure 3, correspondant à l'état fermé de la vanne d'équilibrage 32, dans lequel le bord périphérique 42 est en contact sur tout le pourtour de la vanne d'équilibrage 32 avec la face intérieure 22.1 du bouchon 22 ainsi qu'un deuxième état déformé de manière élastique, visible sur la figure 4, correspondant à l'état ouvert de la vanne d'équilibrage 32, dans lequel le bord périphérique 42 est écarté de la face intérieure 22.1 du bouchon 22.

En fonctionnement, lorsque l'aéronef est en vol, la pression dans la zone extérieure Ze est nettement inférieure à celle de la zone intérieure Zi. La zone extérieure Ze communiquant avec l'évidement 38 via les orifices traversants 30, il existe une différence de pression entre la zone intérieure Zi et l'évidement 38 qui tend à fortement plaquer la vanne d'équilibrage 32 et plus particulièrement son bord périphérique 42 contre la face intérieure 22.1 du bouchon 22, renforçant ainsi l'étanchéité entre la vanne d'équilibrage 32 et le bouchon 22, comme illustré sur la figure 3.

Lorsque l'aéronef est au sol, la pression dans la zone Ze est supérieure ou égale à celle de la zone intérieure Zi. La zone extérieure Ze communiquant avec l'évidement 38 via les orifices traversants 30, la pression dans l'évidement 38 est supérieure ou égale à celle de la zone intérieure Zi. Si les pressions sont équilibrées de part et d'autre de la vanne d'équilibrage 32, le bouchon 22 peut s'ouvrir facilement. Si la pression dans l'évidement 38 est supérieure à celle de la zone intérieure Zi alors le bord périphérique 42 de la vanne d'équilibrage s'écarte du bouchon 32 de sorte que les pressions de part et d'autre de la vanne d'équilibrage 32 s'équilibrent automatiquement. Les pressions étant désormais équilibrées de part et d'autre du bouchon 32, ce dernier peut facilement s'ouvrir.

## Revendications

1. Dispositif de vidange pour un réservoir (14) d'aéronef (10) comprenant :
- un conduit de vidange (18) qui présente une extrémité amont configurée pour déboucher dans le réservoir (14) et une extrémité aval (18.1),
- une vanne de vidange (20) positionnée entre les extrémités amont et aval du conduit de vidange (18),
- un bouchon (22) configuré pour occuper une position fermée dans laquelle le bouchon (22) obture l'extrémité aval (18.1) du conduit de vidange (18) et une position ouverte dans laquelle le bouchon (22) dégage l'extrémité aval (18.1) du conduit de vidange (18), le bouchon (22) séparant, en position fermée, une zone extérieure (Ze) et une zone intérieure (Zi) située dans le conduit de vidange (18) entre la vanne de vidange (20) et le bouchon (22) en position fermée, le bouchon (22) présentant une face intérieure (22.1) orientée vers la zone intérieure (Zi) ainsi qu'une face extérieure (22.2) orientée vers la zone extérieure (Ze),
**caractérisé en ce que** le dispositif de vidange (16) comprend un système d'équilibrage de pression (28) comportant au moins un orifice traversant (30) reliant les faces intérieure et extérieure (22.1, 22.2) du bouchon (22) ainsi qu'au moins une vanne d'équilibrage (32) supportée par le bouchon (22) et configurée pour occuper un état ouvert dans lequel la vanne d'équilibrage (32) permet aux zones intérieure et extérieure (Ze, Zi) de communiquer entre elles via le (ou les) orifice(s) traversant(s) (30) et un état fermé dans lequel la vanne d'équilibrage (32) empêche les zones intérieure et extérieure (Ze, Zi) de communiquer entre elles.

2. Dispositif de vidange selon la revendication 1, **caractérisé en ce que** la vanne d'équilibrage (32) est positionnée dans la zone intérieure (Zi) et présente une première face (32.1) orientée vers la face intérieure (22.1) du bouchon (22) ainsi qu'une deuxième face (32.2) opposée à la première face 32.1), la première face (32.1) étant plaquée contre la face intérieure (22.1) du bouchon (22) à l'état fermé.

3. Dispositif de vidange selon la revendication précédente, **caractérisé en ce que** le bouchon (22) comprend un trou (34) le traversant et **en ce que** la vanne d'équilibrage (32) comprend une tige (36) configurée pour se loger dans le trou (34), la tige (36) présentant une section sensiblement identique à celle du trou (34), une première extrémité reliée à la première face (32.1) de la vanne d'équilibrage (32) ainsi qu'une extrémité libre (36.1) opposée à la première extrémité.

4. Dispositif de vidange selon la revendication précédente, **caractérisé en ce que** le trou (34) présente un axe sensiblement perpendiculaire à la face intérieure (22.1) du bouchon (22) et **en ce que** la tige (36) est sensiblement perpendiculaire à la première face (32.1) de la vanne d'équilibrage (32) et centrée par rapport à cette première face (32.1).

5. Dispositif de vidange selon l'une des revendications 3 à 4, **caractérisé en ce que** le bouchon (22) présente une épaisseur correspondant à une distance séparant les faces intérieure et extérieure (22.1, 22.2) du bouchon (22) et **en ce que** la tige (36) a une longueur supérieure à l'épaisseur du bouchon (22) pour que l'extrémité libre (36.1) de la tige (36) soit accessible et actionnable depuis la zone extérieure (Ze).

6. Dispositif de vidange selon l'une des revendications 3 à 5, **caractérisé en ce que** la vanne d'équilibrage (32) comprend, au niveau de sa première face (32.1), au moins un évidement (38) qui forme une cavité entre le bouchon (22) et la vanne d'équilibrage (32) lorsque cette dernière est à l'état fermé.

7. Dispositif de vidange selon la revendication précédente, **caractérisé en ce que** le dispositif de vidange comprend plusieurs orifices traversants (30) et une unique vanne d'équilibrage (32), les orifices traversants (30) et la vanne d'équilibrage (32) étant configurés et positionnés les uns par rapport aux autres de manière à ce que chaque orifice traversant (30) débouche au droit d'un évidement (38) lorsque la vanne d'équilibrage (32) est à l'état fermé.

8. Dispositif de vidange selon l'une des revendications 6 à 7, **caractérisé en ce que** l'évidement (38) forme une gorge annulaire qui s'étend tout autour de la tige (36).

9. Dispositif de vidange selon la revendication précédente, **caractérisé en ce que** l'évidement (38) est distant de la tige (36) de sorte que la première face (32.1) de la vanne d'équilibrage (32) forme un épaulement (40) entre l'évidement (38) et la tige (36).

10. Dispositif de vidange selon l'une des revendications 8 à 9, **caractérisé en ce que** l'évidement (38) est distant de la deuxième face (32.2) de la vanne d'équilibrage (32) sur toute la circonférence de la vanne d'équilibrage (32), la première face (32.1) de la vanne d'équilibrage (32) formant, entre l'évidement (38) et la deuxième face (32.2), un bord périphérique (42), qui s'étend sur toute la circonférence de la vanne d'équilibrage (32), configuré pour être en contact avec la face intérieure (22.1) du bouchon (22) lorsque la vanne d'équilibrage (32) est à l'état fermé.

11. Dispositif de vidange selon la revendication précédente, **caractérisé en ce que** la vanne d'équilibrage (32) comprend une collerette (44), située entre l'évidement (38) et la deuxième face (32.2) de la vanne d'équilibrage (32), qui s'étend jusqu'au bord périphérique (42) et **en ce que** la vanne d'équilibrage (32) est réalisée dans un matériau permettant à la collerette (44) de se déformer de manière élastique entre un premier état non déformé, correspondant à l'état fermé de la vanne d'équilibrage (32), dans lequel le bord périphérique (42) est en contact avec la face intérieure (22.1) du bouchon (22) sur tout le pourtour de la vanne d'équilibrage (32), ainsi qu'un deuxième état déformé de manière élastique, correspondant à l'état ouvert de la vanne d'équilibrage (32), dans lequel le bord périphérique (42) est écarté de la face intérieure (22.1) du bouchon (22).

12. Aéronef comprenant un dispositif de vidange selon l'une des revendications précédentes.

## Patentansprüche

1. Entleerungsvorrichtung für einen Tank (14) eines Flugzeugs (10), umfassend:
- ein Entleerungsrohr (18), das ein vorgelagertes Ende, das so konfiguriert ist, dass es in den Tank (14) mündet, und ein nachgelagertes Ende (18.1) besitzt,
- ein Ablassventil (20), das zwischen dem vorgelagerten und dem nachgelagerten Ende des Entleerungsrohrs (18) positioniert ist,
- einen Stopfen (22), der so konfiguriert ist, dass er eine geschlossene Position einnimmt, in der der Stopfen (22) das nachgeschaltete Ende (18.1) des Entleerungsrohrs (18) verschließt, und eine offene Position, in der der Stopfen (22) das nachgeschaltete Ende (18.1) des Entleerungsrohrs (18) freigibt, wobei der Stopfen (22) in geschlossener Position einen Außenbereich (Ze) und einen Innenbereich (Zi) trennt, der sich in dem Entleerungsrohr (18) zwischen dem Ablassventil (20) und dem Stopfen (22) in geschlossener Position befindet, wobei der Stopfen (22) eine zu dem Innenbereich (Zi) ausgerichtete Innenseite (22.1) sowie eine zu dem Außenbereich (Ze) ausgerichtete Außenseite (22.2) besitzt,
**dadurch gekennzeichnet, dass** die Entleerungsvorrichtung (16) ein Druckausgleichssystem (28) umfasst, das mindestens eine Durchgangsöffnung (30), die die Innen- und die Außenseite (22.1, 22.2) des Stopfens (22) verbindet, sowie mindestens ein Ausgleichsventil (32) aufweist, das von dem Stopfen (22) getragen wird und so konfiguriert ist, dass es einen offenen Zustand, in dem das Ausgleichsventil (32) es dem Innen- und dem Außenbereich (Ze, Zi) ermöglicht, über die Durchgangsöffnung(en) (30) miteinander in Verbindung zu stehen, und einen geschlossenen Zustand einnimmt, in dem das Ausgleichsventil (32) verhindert, dass der Innen- und der Außenbereich (Ze, Zi) miteinander in Verbindung stehen.

2. Entleerungsvorrichtung nach Anspruch 1, **dadurch gekennzeichnet, dass** das Ausgleichsventil (32) in dem Innenbereich (Zi) positioniert ist und eine erste Seite (32.1), die zu der Innenseite (22.1) des Stopfens (22) ausgerichtet ist, sowie eine zweite Seite (32.2) gegenüber der ersten Seite (32.1) besitzt, wobei die erste Seite (32.1) in dem geschlossenen Zustand gegen die Innenseite (22.1) des Stopfens (22) gedrückt wird.

3. Entleerungsvorrichtung nach dem vorhergehenden Anspruch, **dadurch gekennzeichnet, dass** der Stopfen (22) ein durchgehendes Loch (34) umfasst und dass das Ausgleichsventil (32) einen Stab (36) umfasst, der so konfiguriert ist, dass er in das Loch (34) passt, wobei der Stab (36) einen im Wesentlichen identischen Querschnitt wie das Loch (34), ein erstes Ende, das mit der ersten Seite (32.1) des Ausgleichsventils (32) verbunden ist, und ein freies Ende (36.1) gegenüber dem ersten Ende besitzt.

4. Entleerungsvorrichtung nach dem vorhergehenden Anspruch, **dadurch gekennzeichnet, dass** das Loch (34) eine Achse besitzt, die im Wesentlichen senkrecht zu der Innenseite (22.1) des Stopfens (22) steht, und dass der Stab (36) im Wesentlichen senkrecht zu der ersten Seite (32.1) des Ausgleichsventils (32) steht und in Bezug auf diese erste Seite (32.1) zentriert ist.

5. Entleerungsvorrichtung nach einem der Ansprüche 3 bis 4, **dadurch gekennzeichnet, dass** der Stopfen (22) eine Dicke besitzt, die einem Abstand zwischen der Innen- und der Außenseite (22.1, 22.2) des Stopfens (22) entspricht, und dass der Stab (36) eine Länge hat, die größer ist als die Dicke des Stopfens (22), damit das freie Ende (36.1) des Stabs (36) von dem Außenbereich (Ze) aus zugänglich und betätigbar ist.

6. Entleerungsvorrichtung nach einem der Ansprüche 3 bis 5, **dadurch gekennzeichnet, dass** das Ausgleichsventil (32) an seiner ersten Seite (32.1) mindestens eine Aussparung (38) umfasst, die einen Hohlraum zwischen dem Stopfen (22) und dem Ausgleichsventil (32) bildet, wenn sich dieses in dem geschlossenen Zustand befindet.

7. Entleerungsvorrichtung nach dem vorhergehenden Anspruch, **dadurch gekennzeichnet, dass** die Entleerungsvorrichtung mehrere Durchgangsöffnungen (30) und ein einziges Ausgleichsventil (32) umfasst, wobei die Durchgangsöffnungen (30) und das Ausgleichsventil (32) so zueinander konfiguriert und positioniert sind, dass jede Durchgangsöffnung (30) in dem geschlossenen Zustand des Ausgleichsventils (32) in einer Aussparung (38) mündet.

8. Entleerungsvorrichtung nach einem der Ansprüche 6 bis 7, **dadurch gekennzeichnet, dass** die Aussparung (38) eine ringförmige Nut bildet, die sich um den Stab (36) erstreckt.

9. Entleerungsvorrichtung nach dem vorhergehenden Anspruch, **dadurch gekennzeichnet, dass** die Aussparung (38) von dem Stab (36) entfernt ist, so dass die erste Seite (32.1) des Ausgleichsventils (32) eine Schulter (40) zwischen der Aussparung (38) und dem Stab (36) bildet.

10. Entleerungsvorrichtung nach einem der Ansprüche 8 bis 9, **dadurch gekennzeichnet, dass** die Aussparung (38) über den gesamten Umfang des Ausgleichsventils (32) von der zweiten Seite (32.2) des Ausgleichsventils (32) entfernt ist, wobei die erste Seite (32.1) des Ausgleichsventils (32) zwischen der Aussparung (38) und der zweiten Seite (32.2) eine Umfangskante (42) bildet, die sich über den gesamten Umfang des Ausgleichsventils (32) erstreckt und so konfiguriert ist, dass sie mit der Innenseite (22.1) des Stopfens (22) in Kontakt steht, wenn sich das Ausgleichsventil (32) in dem geschlossenen Zustand befindet.

11. Entleerungsvorrichtung nach dem vorhergehenden Anspruch, **dadurch gekennzeichnet, dass** das Ausgleichsventil (32) einen Kragen (44) umfasst, der sich zwischen der Aussparung (38) und der zweiten Seite (32.2) des Ausgleichsventils (32) befindet und sich bis zu der Umfangskante (42) erstreckt, und dass das Ausgleichsventil (32) aus einem Material hergestellt ist, das es dem Kragen (44) ermöglicht, sich zwischen einem ersten unverformten Zustand, der dem geschlossenen Zustand des Ausgleichsventils (32) entspricht, wobei die Umfangskante (42) über den gesamten Umfang des Ausgleichsventils (32) mit der Innenseite (22.1) des Stopfens (22) in Kontakt steht, und einem zweiten elastisch verformten Zustand, der dem geöffneten Zustand des Ausgleichsventils (32) entspricht, wobei die Umfangskante (42) von der Innenseite (22.1) des Stopfens (22) entfernt ist, elastisch zu verformen.

12. Flugzeug, umfassend eine Entleerungsvorrichtung nach einem der vorhergehenden Ansprüche.

## Claims

1. Drainage device for an aircraft (10) tank (14) comprising:
- a drain pipe (18) which has an upstream end configured to open into the tank (14) and a downstream end (18.1),
- a drain valve (20) positioned between the upstream and downstream ends of the drain pipe (18),
- a plug (22) configured to occupy a closed position in which the plug (22) closes the downstream end (18.1) of the drain pipe (18) and an open position in which the plug (22) clears the downstream end (18.1) of the drain pipe (18), the plug (22) separating, in the closed position, an outer zone (Ze) and an inner zone (Zi) located in the drain pipe (18) between the drain valve (20) and the plug (22) in the closed position, the plug (22) having an inner face (22.1) oriented towards the inner zone (Zi) as well as an outer face (22.2) oriented towards the outer zone (Ze),
**characterised in that** the drainage device (16) comprises a pressure balancing system (28) including at least one through-hole (30) connecting the inner and outer faces (22.1, 22.2) of the plug (22), as well as at least one balancing valve (32) supported by the plug (22) and configured to be in an open state in which the balancing valve (32) allows communication between the inner and outer zones (Ze, Zi) via the through-hole(s) (30), and a closed state in which the balancing valve (32) prevents communication between the inner and outer zones (Ze, Zi).

2. Drainage device according to Claim 1, **characterised in that** the balancing valve (32) is positioned in the inner zone (Zi) and has a first face (32.1) oriented towards the inner face (22.1) of the plug (22) and a second face (32.2) opposite the first face (32.1), with the first face (32.1) pressed against the inner face (22.1) of the plug (22) when in the closed state.

3. Drainage device according to the preceding claim, **characterised in that** the plug (22) comprises a hole (34) passing through it and **in that** the balancing valve (32) comprises a rod (36) configured to fit into the hole (34), the rod (36) having a cross-section that is substantially identical to that of the hole (34), with one end connected to the first face (32.1) of the balancing valve (32) and a free end (36.1) opposite the first end.

4. Drainage device according to the preceding claim, **characterised in that** the hole (34) has an axis that is substantially perpendicular to the inner face (22.1) of the plug (22), and **in that** the rod (36) is substantially perpendicular to the first face (32.1) of the balancing valve (32) and centred relative to this first face (32.1).

5. Drainage device according to either one of Claims 3 or 4, **characterised in that** the plug (22) has a thickness corresponding to a distance separating the inner and outer faces (22.1, 22.2) of the plug (22) and **in that** the rod (36) has a length greater than the thickness of the plug (22) so that the free end (36.1) of the rod (36) is accessible and operable from the outer zone (Ze).

6. Drainage device according to one of Claims 3 to 5, **characterised in that** the balancing valve (32) comprises, on its first face (32.1), at least one recess (38) that creates a cavity between the plug (22) and the balancing valve (32) when the latter is in the closed state.

7. Drainage device according to the preceding claim, **characterised in that** the drainage device comprises a plurality of through-holes (30) and a single balancing valve (32), the through-holes (30) and the balancing valve (32) being configured and positioned relative to one another such that each through-hole (30) opens into a recess (38) when the balancing valve (32) is in the closed state.

8. Drainage device according to either one of Claims 6 or 7, **characterised in that** the recess (38) forms an annular groove that extends completely around the rod (36).

9. Drainage device according to the preceding claim, **characterised in that** the recess (38) is spaced apart from the rod (36) such that the first face (32.1) of the balancing valve (32) forms a shoulder (40) between the recess (38) and the rod (36).

10. Drainage device according to either one of Claims 8 or 9, **characterised in that** the recess (38) is spaced from the second face (32.2) of the balancing valve (32) around the entire circumference of the balancing valve (32), with the first face (32.1) of the balancing valve (32) forming, between the recess (38) and the second face (32.2), a peripheral edge (42) that extends around the entire circumference of the balancing valve (32), configured to be in contact with the inner face (22.1) of the plug (22) when the balancing valve (32) is in the closed state.

11. Drainage device according to the preceding claim, **characterised in that** the balancing valve (32) comprises a collar (44), positioned between the recess (38) and the second face (32.2) of the balancing valve (32), which extends to the peripheral edge (42), and **in that** the balancing valve (32) is made from a material that allows the collar (44) to deform elastically between a first non-deformed state, corresponding to the closed state of the balancing valve (32), in which the peripheral edge (42) is in contact with the inner face (22.1) of the plug (22) around the entire circumference of the balancing valve (32), and a second elastically deformed state, corresponding to the open state of the balancing valve (32), in which the peripheral edge (42) is spaced away from the inner face (22.1) of the plug (22).

12. Aircraft comprising a drainage device according to one of the preceding claims.
